# EUROPEAN PATENT APPLICATION

(11) **EP 3 401 579 A1**
(43) Date of publication of application: **14.11.2018**
(21) Application number: 17195546.1
(22) Date of filing: 09.10.2017
(51) Int. Cl.: F16K 15/18, F16K 15/20, A47C 27/08

(54) **AIR VALVE ASSEMBLY AND INFLATABLE PRODUCT**

(30) Priority: 12.05.2017 CN 201720527876 U
(71) Applicant: Bestway Inflatables & Material Corp., Shanghai 201812 (CN)
(72) Inventor: HUANG, Shuiyong, Shanghai, 201812 (CN); QIU, Wanbin, Shanghai, 201812 (CN)
(74) Representative: Piticco, Lorena

(57) **Abstract**

An air valve assembly and an inflatable product are provided. The air valve assembly includes a valve body and a plug; where the valve body includes: a first chamber including a first air inlet and a first air outlet; a plurality of second chambers, where each of the plurality of second chambers includes a second air inlet and a second air outlet; a separating portion fixedly disposed between two adjacent second chambers and configured to separate the two adjacent second chambers; and at least one valve spool assembly disposed within the valve body and configured to control flow of air in the valve body; and the plug is detachably connected with the valve body to prevent flow of air; where the first air outlet is communicated with the second air inlet of each of the plurality of second chambers. Therefore, inflation or deflation process can be simplified and timesaving.

## Description

### TECHNICAL FIELD

The present disclosure relates to valve technology field, and more particularly, to an air valve assembly and an inflatable product.

### BACKGROUND

Inflatable products, such as an inflatable mattress, may have two or more independent air chambers. In a conventional technology, an inflatable product having a plurality of independent air chambers is usually provided with a plurality of valve assemblies, so that each of the plurality of valve assemblies can be correspondingly disposed in one of the plurality of independent air chambers. Therefore, it is usually necessary to inflate or deflate the plurality of independent chambers through the plurality of valve assemblies respectively, which may result in a complicated and time consuming inflation or deflation process.

### SUMMARY

An air valve assembly is provided in the present disclosure, so as to solve problems in a conventional technology that, an inflation or deflation process of an inflatable product with a plurality of independent air chambers is complicated and time consuming.

The air valve assembly includes a valve body and a plug; where the valve body includes: a first chamber including a first air inlet and a first air outlet; a plurality of second chambers, where each of the plurality of second chambers includes a second air inlet and a second air outlet; a separating portion fixedly disposed between two adjacent second chambers and configured to separate the two adjacent second chambers; and at least one valve spool assembly disposed within the valve body and configured to control flow of air in the valve body; and the plug is detachably connected with the valve body to prevent the flow of air; wherein the first air outlet of the first chamber is communicated with the second air inlet of each of the plurality of second chambers.

Optionally, the valve body includes a plurality of valve spool assemblies, and the plurality of valve spool assemblies are respectively disposed in the plurality of second chambers.

Optionally, the plug includes a plurality of second plug portions, and the plurality of second plug portions are respectively detachably disposed in the plurality of second chambers to prevent the flow of air.

Optionally, the plug further includes a first plug portion, and the first plug portion is detachably disposed in the first chamber to prevent the flow of air.

Optionally, the plug further includes an end cap disposed at an upper end, and the first plug portion and the plurality of second plug portions are fixedly disposed on the end cap and extend to a lower end of the plug.

Optionally, a plurality of first sealing contact surfaces are disposed at edges of a lower end portion of each of the plurality of second plug portions of the plug, a plurality of second sealing contact surfaces are disposed at edges of an upper end portion of the separating portion, and the plurality of second sealing contact surfaces are detachably connected with the plurality of first sealing contact surfaces.

Optionally, the first plug portion and the plurality of second plug portions are respectively provided with at least one hollow slot, and the at least one hollow slot is configured to make the first plug portion and the plurality of second plug portions easy to be deformed under pressure.

Optionally, the air valve assembly further includes a valve seat having a third chamber, wherein the valve body is detachably disposed in the third chamber, and is in sealing contact with the valve seat.

Optionally, the valve body and the plug are connected with each other by a first flexible connection belt; an outer side wall of an upper end of the valve body extends outwardly to form a first edge, and the first flexible connection belt is connected with an upper end of the plug and the first edge of the valve body.

Optionally, the air valve assembly further includes a connecting ring, wherein an outer side wall of an upper end of the valve body extends outwardly to form a first edge, the connecting ring is connected with the first edge via a second flexible connection belt; and an outer side wall of an upper end of the valve seat extends outwardly to form a second edge, and the connecting ring is configured to be sleeved on an outer side wall of an upper end of the valve seat below the second edge.

Optionally, an outer side wall of the valve seat below the second edge extends outwardly to form a third edge; and the connecting ring is configured to be sleeved between the second edge and the third edge.

Optionally, an axial height of the valve body is greater than an axial height of the valve seat; and an outer side wall of a lower end of the valve body extends outwardly to form a circle of convex ribs, the valve body is configured to pass through the valve seat and clamp the valve seat between the convex ribs and the first edge.

Optionally, each of the plurality of valve spool assemblies includes: a first support frame, fixed to an inner side wall of a lower end of the second chamber; and a valve piece, fixed to the first support frame and configured to be in sealing contact with the valve body.

Optionally, the valve body includes two second chambers, the plug includes two second plug portions, and the two second plug portions are respectively detachably disposed in the two second chambers

Optionally, a second support frame is disposed at a lower end of the valve seat; and a groove is disposed on the separating portion of the valve body, an opening of the groove faces downward, and the second support frame is detachably disposed in the groove.

Optionally, the air valve assembly further includes a weld portion, and the weld portion includes: a first weld portion disposed at an outer side wall of an upper end of the valve seat; and a second weld portion disposed at the second air outlet.

Optionally, the outer side wall of the upper end of the valve seat extends outwardly to form a third edge, the first weld portion is fixedly connected with the third edge; and the second weld portion is fixedly connected with a lower end of the valve seat.

Optionally, the first weld portion is provided with a fourth edge extending outwardly, and the second weld portion is provided with a fifth edge extending outwardly.

Optionally, the weld portion is fixedly connected with the valve seat through secondary injection molding.

Optionally, the at least one valve spool assembly is disposed in the first chamber, and is disposed at a junction of the first chamber and the second chamber.

Optionally, the at least one valve spool assembly includes: a first support frame fixed to an inner side wall of a lower end of the first chamber; and a valve piece fixed between the first support frame and the separating portion, an upper surface of the valve piece is in sealing contact with a lower surface of the first support frame, and a lower surface of the valve piece is in sealing contact with an upper surface of the separating portion.

Optionally, the air valve assembly may further include a valve seat having a third chamber, wherein the valve body is detachably disposed in the third chamber and is in sealing contact with the valve seat.

Optionally, the valve spool assembly further includes a valve stem, a pressing piece, a contact pin and a spring; the valve stem is fixedly connected with the first support frame, the spring is sleeved on the valve stem, and the pressing piece is sleeved on the valve stem; the pressing piece is disposed above the spring; and the contact pin extends from the pressing piece to a top of the valve piece, one end of the contact pin is fixed to the pressing piece, and the other end of the contact pin is in contact with the top of the valve piece.

An inflatable product is also provided according to embodiments. The inflatable product may include the aforementioned air valve assembly.

The valve spool assembly in the present disclosure is disposed in the valve body and can be opened and closed, so as to achieve communication and isolation of the air chamber and the valve body.

In order to solve the above technical problems, an inflatable product including the air valve assembly as described above is also provided in the present disclosure.

Compared with the conventional technology, the present disclosure has the following advantages.

The air valve assembly in the present disclosure includes a valve body and a plug, where the valve body includes a first chamber and a plurality of second chambers communicated with the first chamber. Therefore, the air valve assembly can be applied to an inflatable product having two or more independent air chambers. For example, if the valve body includes two second chambers, then the air valve assembly can be applied to an inflatable product having two independent air chambers, one of the two second chambers may be communicated with one of the two independent air chambers, and the other of the two second chambers may be communicated with the other of the two independent air chambers. When the inflatable product needs to be inflated, an inflatable pump may be used to be communicated with a first chamber of the valve body, then air in the first chamber can enter the two independent air chambers through the two second chambers to complete the inflation. Therefore, there is no need to use different air valves corresponding to different air chambers, which can solve the problem of the inflation or deflation process being complicated and time consuming.

Moreover, due to the different second chambers are separated from each other, that is, when the inflation is completed, air in one independent air chamber of the inflatable product will not flow to other independent chambers through the second chambers. Therefore, when one independent air chamber of the inflatable product is leaked due to damage, other independent air chambers will not be affected and can be used normally.

### BRIEF DESCRIPTION OF THE DRAWINGS

Fig. 1 schematically illustrates a front view of an air valve assembly 100 according to a first embodiment of the present disclosure;
Fig. 2 schematically illustrates a cross-sectional view of the air valve assembly 100 shown in Fig. 1;
Fig. 3 schematically illustrates an exploded view of the air valve assembly 100 shown in Fig. 1;
Fig. 4 schematically illustrates an enlarged view of an area A shown in Fig. 2;
Fig. 5 schematically illustrates a stereogram of a valve body 10 and a plug 20 in the air valve assembly 100 according to the first embodiment of the present disclosure;
Figs. 6 and 7 schematically illustrate cross-sectional views of the valve body 10 shown in Fig. 5;
Fig. 8 schematically illustrates a stereogram of a valve seat 30 in the air valve assembly 100 according to the first embodiment of the present disclosure;
Figs. 9 and 10 schematically illustrate cross-sectional views of the valve seat 30 shown in Fig.8;
Figs. 11 and 12 schematically illustrate cross-sectional views of a valve body 40 of an air valve assembly 200 in different states according to a second embodiment of the present disclosure; and
Figs. 13 and 14 schematically illustrate cross-sectional views of a valve body 60 of an air valve assembly 300 in different states according to a third embodiment of the present disclosure.

### DETAILED DESCRIPTION

In order to make the above-mentioned objects, features and advantages of the present disclosure more easily understood, specific embodiments of the present disclosure will be described in detail with reference to the accompanying drawings.

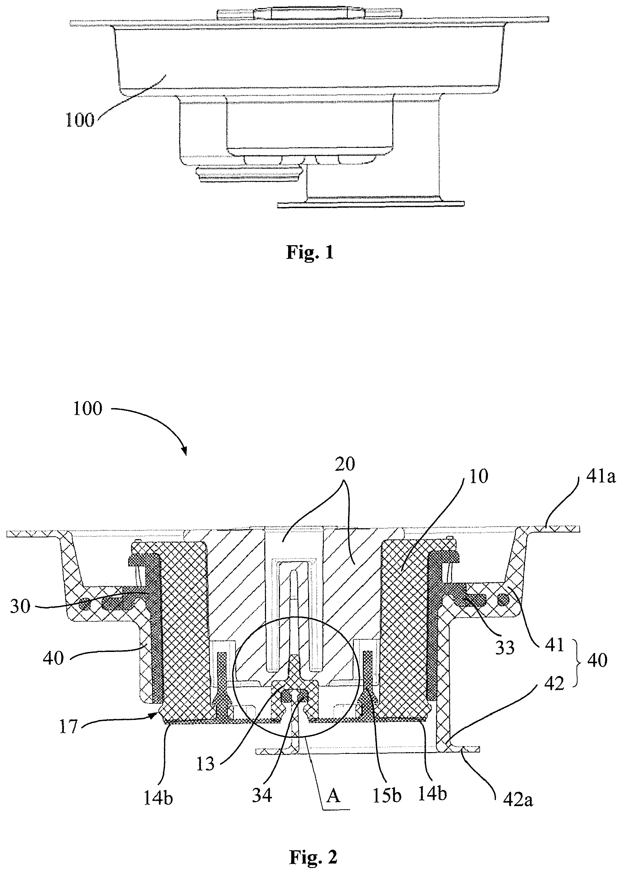

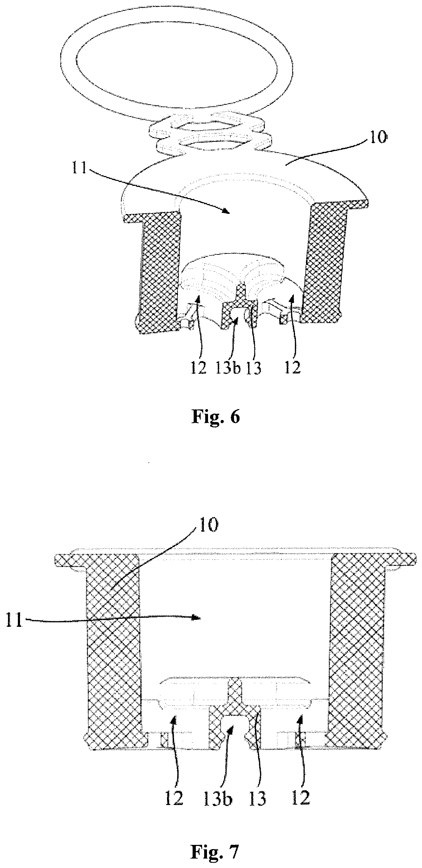

Referring to Figs. 1 to 3, an air valve assembly 100 disposed on an inflatable product, which is applied to inflating or deflating the inflatable product, is provided according to a first embodiment of the present disclosure. The air valve assembly 100 includes a valve body 10, where the valve body 10 has a first chamber 11 and two second chambers 12 (shown in Figs. 6 and 7). The first chamber 11 has a first air inlet 11 a and a first air outlet (not shown), each of the two second chambers 12 has a second air inlet (not shown) and a second air outlet 12a, and the first air outlet is communicated with the two second air inlets. In another word, one end of the first chamber is communicated with one end of each of the two second chambers 12.

A separating portion 13 is disposed in the valve body 10, and is fixedly disposed between the two second chambers 12 for separating the two second chambers 12. An inner side wall of the valve body 10 and an outer side wall of the separating portion 13 define the two second chambers 12.

In some embodiments, the air valve assembly 100 further includes a plug 20, the plug 20 has two second plug portions 22, and the two second plug portions 22 are respectively detachably disposed in the two second chambers 12. When the air valve assembly 100 is disposed on the inflatable product, the two second plug portions 22 can prevent air in the inflatable product from flowing outside through the two second chambers 12.

The air valve assembly 100 in the present embodiment can be applied to an inflatable product having two independent air chambers. Specifically, one of the two second chambers 12 is communicated with one of the two independent air chambers, the other of the two second chambers 12 is communicated with the other of the two independent air chambers. When the inflatable product needs to be inflated, the two second plug portions 22 are removed from the two second chambers 12, the first chamber 11 is inflated by an inflator apparatus such as an inflator pump, after air goes through the first chamber 11, the air can enter the two independent air chambers through the two second chambers 12, then the two independent air chambers will be inflated due to inflation; when the inflation is completed, the two second plug portions 22 are respectively disposed in the two second chambers 12 to prevent the air from flowing outside through the two second chambers 12.

Thus, for the inflatable product with two independent chambers, there is no need to use two air valves corresponding to two independent air chambers respectively as in the conventional technology, thus the technical problem of the inflation or deflation process being complicated and time consuming can be avoided at the same time. Moreover, since the two second chambers 12 are separated from each other, air in the two independent air chambers will not exchange with each other when the inflation is completed, thereby ensuring that one of the two independent air chambers will not be affected and can be normally used, when the other of the two independent air chambers in the inflatable product is leaked due to damage.

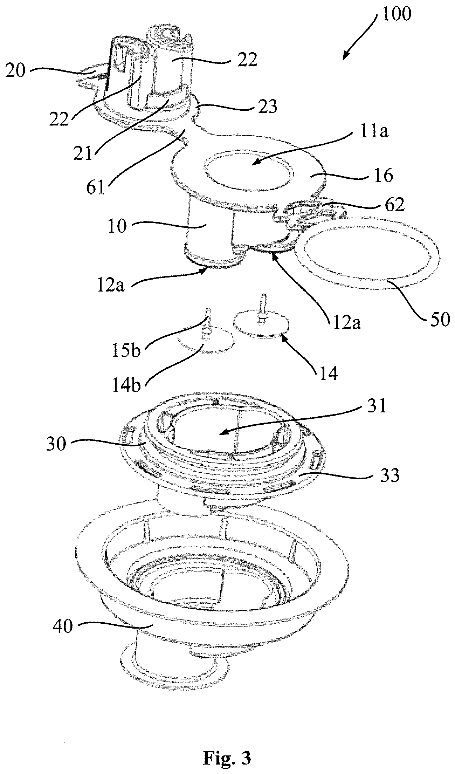

Referring to Figs. 2 and 3, in some embodiments, the valve body 10 further includes two valve spool assemblies 14 which are respectively disposed in the two second chambers 12. When the inflatable product is inflated, the two valve spool assemblies 14 can be opened under pressure and allow the two second chambers 12 to be communicated with the two independent air chambers of the inflatable product, so that air can be charged into the two independent air chambers; when the inflation is completed, the valve spool assembly 14 can be automatically closed to prevent the air in the two independent air chambers from flowing outside through the second chamber 12.

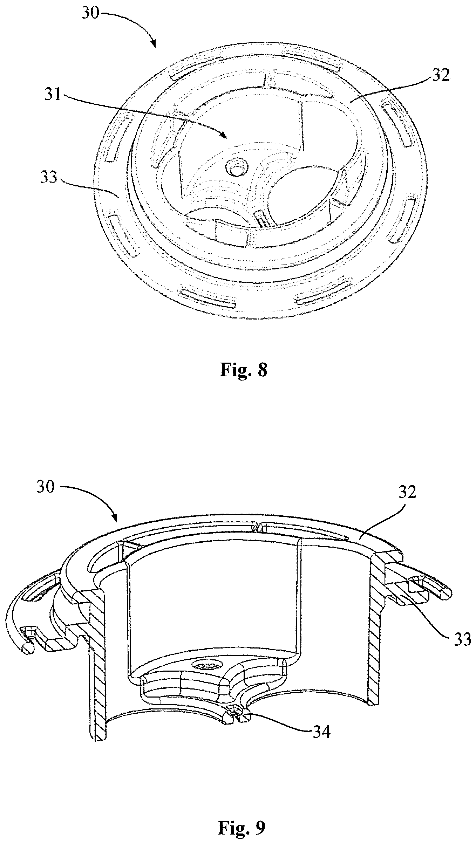

The two valve spool assemblies 14 and the two second plug portions 22 can prevent air flowing between the two second chambers 12, thereby achieving a better sealing effect. The air valve assembly 100 may further include a valve seat 30, the valve seat 30 has a third chamber 31 (shown in Fig. 8), the valve body 10 is detachably disposed in the third chamber 31 and is in sealing contact with the valve seat 30. Therefore, when it is necessary to deflate the inflatable product for storage, a force may be applied to the valve body 10 to remove the valve body 10 from the valve seat 30 to achieve a rapid deflation. Since the valve body 10 is in sealing contact with the valve seat 30, it is possible to prevent the air in the inflatable product from flowing outside in an operation state.

In addition, the valve body 10 is generally made of a flexible material that is deformable, such as polyvinyl chloride, and the valve seat 30 is generally made of a non-deformable plastic material, such as an ABS resin material. An outer shape of the valve body 10 is the same with or similar to a shape of the third chamber 31 of the valve seat 30, and an outer dimension of the valve body 10 is slightly larger than a dimension of the third chamber 31 of the valve seat 30. The valve body 10 can be slightly deformed under an external force and be squeezed into the third chamber 31, where an outer side wall of the valve body 10 is in close contact with an inner side wall of the valve seat 30 to achieve the sealing effect.

A main function of the valve seat 30 is to achieve a rapid deflation of the inflatable product. In other embodiments, if the air valve assembly 100 can achieve deflation of the inflatable product by other means (e.g., opening the valve spool assembly 14 during deflation), the valve seat 30 may not be provided.

It is should be noted that, a number of the second chambers 12 in the air valve assembly in the present disclosure is not limited to two, and the second chambers 12 may be disposed in accordance with a number of the independent air chambers in the inflatable product.

For example, when the inflatable product has three or more independent air chambers, the air valve assembly 100 may be provided with a plurality of second chambers 12 having a same number with the independent air chambers, and each of the plurality of second chamber 12 may be communicated with a different independent air chamber to achieve a simultaneous inflation of the multiple independent air chambers. It should be ensured that, two adjacent second chambers 12 may not communicate with each other to prevent air flowing from one second chamber 12 to another second chamber 12. Then there may be a plurality of second plug portions 22 of the plug 20, which are detachably disposed in the plurality of second chambers 12 respectively, to prevent air from flowing out of the second chamber 12 to outside.

In addition, a number of the first chambers 11 in the air valve assembly is also not limited to one, when there are a plurality of first chambers 11, a plurality of inflator apparatus may be used to inflate the plurality of first chambers 11 respectively.

In the present embodiment, the first air inlet 11 a and the second air outlet 12a are disposed opposite to each other, so that air can flow into the first air inlet 11a and flow out of the second air outlet 12a in a straight line. In other embodiments, the second air outlet 12a may be disposed on a side wall of the valve body 10, so that the air can flow into the valve body 10 from the first air inlet 11a and flow out from the side wall of the valve body 10.

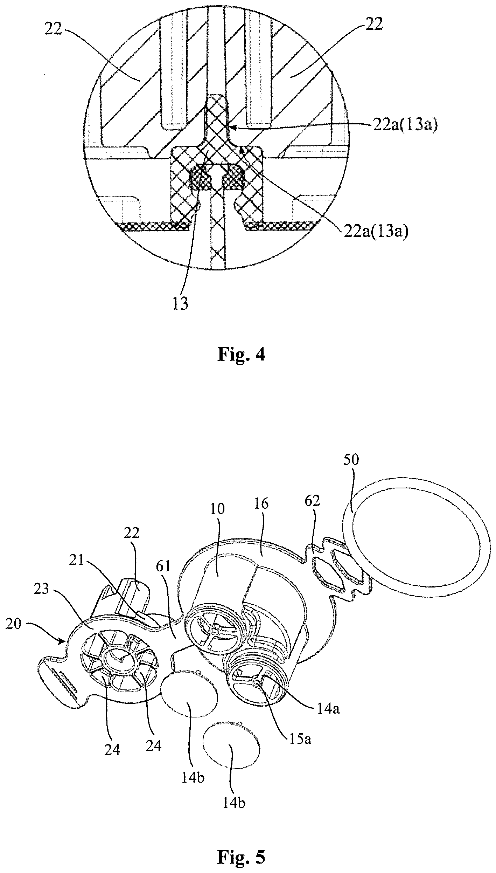

Referring to Fig. 4, a portion of the second plug portion 22 is in sealing contact with the separating portion 13 to prevent the air from flowing out of the second chamber 12. Specifically, two first sealing contact surfaces 22a are disposed at a lower end edge of the two second plug portion 22, two second sealing contact surfaces 13a are disposed at an upper end edge of the separating portion 13; and the two first sealing contact surfaces 22a are respectively in sealing contact with the two second sealing contact surfaces 13a.

The present embodiment has a better sealing performance compared with a condition where only one sealing contact surface is disposed on the second plug portion 22 and the separating portion 13 respectively. It can be understood that, three or more first sealing contact surfaces 22a may be disposed on the second plug portion 22, and three or more second sealing contact surfaces 13a may be disposed on the separating portion 13, so that a better sealing performance can be achieved between the second plug portion 22 and the separating portion 13.

Referring to Fig. 3 in conjunction with Fig. 5, in some embodiments, the plug 20 may also include a first plug portion 21, and the first plug portion 21 is detachably disposed in the first chamber 11. That is, if the second plug portion 22 is out of work, the air may flow into the first chamber 11 from the second chamber 12, the first plug portion 21 can prevent air from flowing out of the first chamber 11, and thus the first plug portion 21 can prevent air from flowing out of the inflatable products.

The first plug portion 21, the second plug portion 22, and the valve spool assembly 14 are all applied to prevent the flow of air between inside and outside of the inflatable product, which can achieve a better sealing effect.

The plug 20 may further include an end cap 23 at an upper end, both the first plug portion 21 and the second plug portion 22 are fixedly disposed on the end cap 23 and extend to a lower end of the plug 20.

In the present embodiment, the "upper end" refers to an end of the air valve assembly 100 disposed outside the inflatable product and communicated with the outside; and the "lower end" refers to an end of the air valve assembly 100 disposed inside the inflatable product and communicated with the independent air chambers of the inflatable product. That is, air flows from the upper end to the lower end of the air valve assembly 100 during an inflation process, and finally flows into the independent air chambers of the inflatable product.

Referring to Fig. 5, in some embodiments, the first plug portion 21 and the second plug portion 22 are provided with at least one hollow slot 24 respectively. When the second plug portion 22 is inserted into the second chamber 12 and the first plug portion 21 is inserted into the first chamber 11, the second plug portion 22 and the first plug portion 21 will deform easily under pressure, so that the plug 20 can be more easily inserted into the valve body 10, and an effective seal can be ensured between the second plug portion 22 and the second chamber 12, and between the first plug portion 21 and the first chamber 11. In the present embodiment, both the valve body 10 and the plug 20 are made of a flexible material that is deformable. Specifically, both the valve body 10 and the plug 20 are made of polyvinyl chloride (PVC).

Referring to Fig. 3 in conjunction with Fig. 5, the valve spool assembly 14 in the valve body 10 may include a first support frame 14a and a valve piece 14b, where the first support frame 14a is fixed to an inner side wall of a lower end of the second chamber 12, and the valve piece 14b is fixed to the first support frame 14a and is in sealing contact with the valve body 10. Specifically, the first support frame 14a includes a plurality of support ribs distributed along a circumferential direction of the second chamber 12 and a connection hole 15a, one end of each of the plurality of support ribs is fixedly connected with the inner side wall of the lower end of the second chamber 12, the other end of each of the plurality of support ribs forms the connecting hole 15a. A connecting rod 15b is also disposed on the valve piece 14b, and the connecting rod 15b is configured to be inserted into the connecting hole 15a to fix the valve piece 14b.

The valve piece 14b is in sealing contact with the valve body 10 in such a manner that, a surface of the valve piece 14b is hermetically fitted to a lower end face of the second chamber 12. The valve piece 14b is an elastic element which can deform under an external force. When the inflatable product is inflated by an inflator apparatus, air flows from the first chamber 11 to the second chambers 12 and applies a downward force to the valve piece 14b, then the valve piece 14b will be deformed and make the second chambers 12 and independent air chambers of the inflatable product communicated with each other, so that the air can be introduced into the independent air chambers; when the inflation is completed, the valve piece 14b will deform inversely and the air in the independent air chambers will apply an upward force to the valve piece 14b to make the valve piece 14b hermetically fitted to the lower end face of the second chamber 12 all the time, so as to prevent air leakage.

In other embodiments, a surface of the valve piece 14b may be hermetically fitted to a lower end face of the second chamber 12, and a portion of the surface may be fixed to the lower end face, so that the valve piece 14b can be elastically deformed during an inflation process to make the second chambers 12 and the independent air chambers communicated with each other. The valve piece 14b and the lower end face of the second chamber 12 may be fixed by bonding or plastic welding.

As described above, the inflatable product may be deflated by separating the valve body 10 from the valve seat 30, or by opening the valve spool assembly 14. If the deflation is achieved by opening the valve spool assembly 14, a valve stem or a pressing piece may be disposed on an upper surface of the valve piece 14b, and the valve stem or the pressing piece can transmit a force to the valve piece 14b to deform the valve piece 14b, so as to make the second chambers 12 and the independent air chambers communicated with each other.

With continued reference to Fig. 5, in some embodiments, the valve body 10 and the plug 20 may be connected by a first flexible connection belt 61, and the first flexible connecting belt 61 is deformable, so that the plug 20 can be always connected with the valve body 10 regardless that the first plug portion 21 and the second plug portion 22 are attached to or separated from the valve body 10. Therefore, the plug 20 can be quickly matched with the valve body 10 to achieve a sealing contact, and the plug 20 can be prevented from being lost when the plug 20 is removed from the valve body 10.

Specifically, an outer side wall of an upper end of the valve body 10 extends outwardly to form a first edge 16, and one end of the first flexible connection belt 61 is connected with the end cap 23 of the plug 20, and the other end of the first flexible connection belt 61 is connected with the first edge 16.

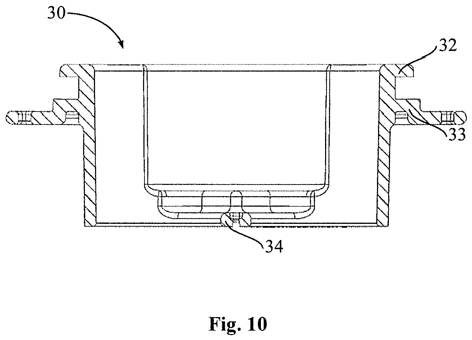

In some embodiments, the valve body assembly 100 may further include a connecting ring 50, and the connecting ring 50 is connected with the first edge 16 of the valve body 10 through a second flexible connection belt 62. An outer side wall of an upper end of the valve seat 30 extends outwardly to form a second edge 32 (as shown in Figs. 9 and 10), a diameter of the connecting ring 50 is smaller than an outer diameter of the second edge 32 and the connecting ring 50 is sleeved on an outer side wall of an upper end of the valve seat 30 below the second edge 32, so that the valve body 10 can be connected with the valve seat 30 all the time, thereby avoiding loss of the valve body 10 when the inflatable product need to be deflated and the valve body 10 is removed from the valve seat 30.

Specifically, an outer side wall of the upper end of the valve seat 30 extends outwardly to form a third edge 33 (as shown in Figs. 9 and 10), the third edge 33 is disposed below the second edge 32. The diameter of the connecting ring 50 is also smaller than an outer diameter of the third edge 33, and the connecting ring 50 is sleeved between the second edge 32 and the third edge 33.

In the present embodiment, as shown in Fig. 2, an axial height of the valve body 10 is larger than an axial height of the valve seat 30, and an outer side wall of a lower end of the valve body 10 extends outwardly to form a circle of convex ribs 17. The valve body 10 passes through the valve seat 30 and clamp the valve seat 30 between the first edge 16 and the convex ribs 17. The first edge 16 and the convex ribs 17 can prevent the valve body 10 from being easily separated from the valve seat 30, so that the valve body 10 can be firmly fixed in the valve seat 30.

The valve seat 30 is generally made of a non-deformable plastic material, such as an ABS resin material. Since the valve body 10 is made of a flexible material which is deformable, when the inflatable product needs to be deflated, a force may be applied to the valve body 10, then the valve body 10 will be deformed and can be removed from the valve seat 30 so as to achieve a rapid deflation.

Referring to Figs. 6 and 7, a groove 13b may be disposed on the separating portion 13 which is configured to separate the two second chambers 12, and the groove 13b has an opening facing downward. Referring to Figs. 8 and 9, a second support frame 34 is disposed at a lower end of the valve seat 30, and the second support frame 34 is detachably disposed in the groove 13b. The second support frame 34 can support the separating portion 13 and prevent the valve body 10 from moving downward excessively during the valve body 10 being inserted into the valve seat 30.

Referring to Figs. 2 and 3, in some embodiments, the air valve assembly 100 may further include a weld portion 40 which is configured to weld the air valve assembly 100 to the inflatable product. The weld portion 40 may include a first weld portion 41 and a second weld portion 42, where the first weld portion 41 is fixed to an outer side wall of an upper end of the valve seat 30, and the second weld portion 42 is fixed at the second air outlet 12a.

Specifically, the first weld portion 41 is fixedly connected to the third edge 33, the first weld portion 41 is provided with a fourth edge 41 a extending outward, and the fourth edge 41a can be welded with a surface of the inflatable product, so that the air valve assembly 100 can be fixedly mounted on the inflatable product.

The second weld 42 is provided with a fifth edge 42a extending outwardly, the fifth edge 42a can be welded to a surface of an intermediate wall between two independent air chambers of the inflatable product, so that air can be introduced into a particular independent air chamber. Referring to Fig. 2, in the present embodiment, the second weld portion 42 extends downward from downside of the second support frame 34 and an outer side wall of the valve seat 30, and then extends outwardly to form a fifth edge 42a at a lower end of the second weld portion 42, so that the two different second chambers can be respectively connected to the two independent air chambers at different locations. The air valve assembly in the present disclosure is configured to be connected with an inflatable product having two different air chambers arranged from up to down. The inflatable product may include an upper wall, an intermediate wall, a lower wall and a side wall; the upper wall, the side wall and the intermediate wall define an upper air chamber; and the lower wall, the side wall and the intermediate wall define a lower air chamber. The first weld portion may be connected with the upper wall of the upper air chamber, and the second weld portion may be connected with the intermediate wall, so that the two air chambers can be inflated or deflated simultaneously.

In the present embodiment, the weld portion 40 is made of a flexible material that is deformable. Specifically, the weld portion 40 is made of polyvinyl chloride (PVC), and is fixedly connected to the valve seat 30 by secondary injection molding.

In the present embodiment, the weld portion 40 is integrally formed, that is, the first weld portion 41 and the second weld portion 42 are integrally formed. In the secondary injection molding process, the valve seat 30 is firstly formed by injection molding, then the valve seat 30 is placed in a secondary molding die for the weld portion 40, and then the weld portion 40 fixed to the valve seat 30 is formed by injection molding again.

An inflatable product is also provided in the present disclosure. The inflatable product includes the aforementioned air valve assembly; and the inflatable product includes a plurality of air chambers, where the plurality of air chambers may be distributed from up to down or from left to right.

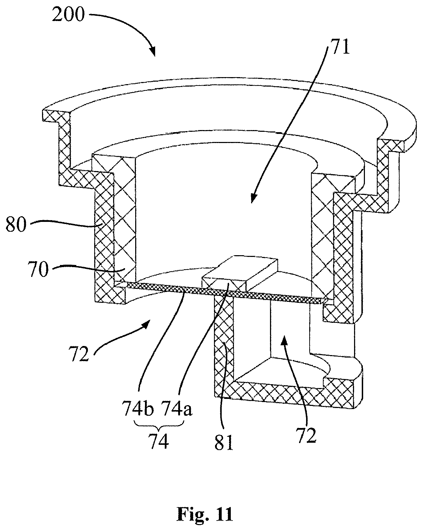

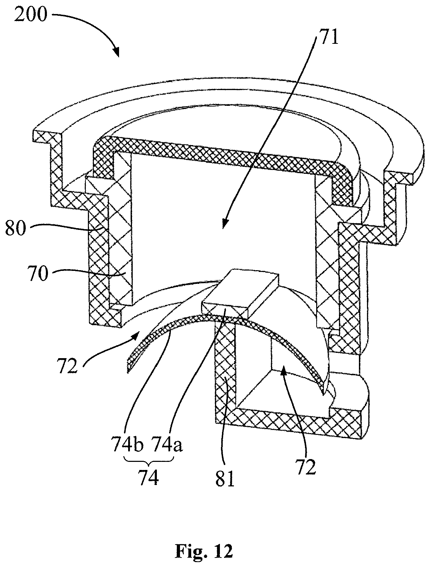

Referring to Figs. 11 and 12, Figs. 11 and 12 schematically illustrate cross-sectional views of a valve body 70 of an air valve assembly 200 in different states according to a second embodiment of the present disclosure. Differences between the second embodiment and the first embodiment lie in that, a valve body 70 includes a valve spool assembly 74 which is disposed in a first chamber 71, and is disposed at a junction of the first chamber 71 and the second chamber 72. The valve spool assembly 74 can be opened when an inflatable product is inflated, so as to make the first chamber 71 and second chambers 72 communicated with each other; and the valve spool assembly 74 can be closed when the inflation is completed, so as to prevent air in the second chambers 72 from flowing outside through the first chamber 71.

In some embodiments, the valve spool assembly 74 may include a first support frame 74a and a valve piece 74b. The first support frame 74a is fixed to an inner side wall of a lower end of the first chamber 71, and the valve piece 74b is fixed between the first support frame 74a and a separating portion 81, and is in sealing contact with the valve body 70. Specifically, an upper surface of the valve piece 74b is fixedly in sealing contact with a lower surface of the first support frame 74a, and a lower surface of the valve piece 74b is detachably in sealing contact with an upper surface of the separating portion 81, so as to prevent flow of air between two adjacent second chambers 72.

The valve piece 74b is an elastic element which is deformable under an external force. When the inflatable product is inflated by an inflator apparatus, air flows into the first chamber 71 and a downward force is applied to the valve piece 74b, then the valve piece 74b will be deformed to make the first chamber 71 and the second chambers 72 (shown in Fig. 12) communicated with each other, so that air can enter the second chambers 72 and eventually enter the independent air chambers of the inflatable product; and when the inflation is completed, the valve piece 74b will deform inversely (shown in Fig. 11), and the air in the second chamber 72 will apply an upward force to the valve piece 74b to make the valve piece 74b hermetically fitted to a lower end face of the first chamber 71 to prevent air leakage.

With continued reference to Figs. 11 and 12, the air valve assembly 200 in the second embodiment may further include a valve seat 80, the valve body 70 is detachably disposed in the valve seat 80 and is in sealing contact with the valve seat 80. When the inflatable product needs to be deflated, a force may be applied to the valve body 70 to remove the valve body 70 from the valve seat 80 to achieve a rapid deflation.

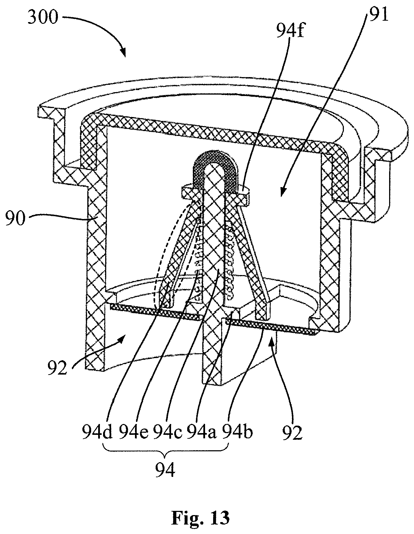

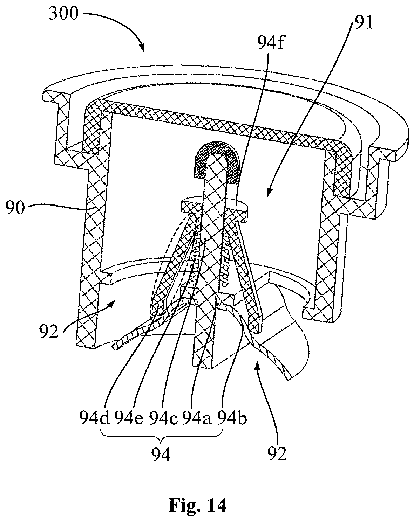

Referring to Figs. 13 and 14, Figs. 13 and 14 schematically illustrate cross-sectional views of a valve body of an air valve assembly 300 according to a third embodiment of the present disclosure. Differences between the third embodiment and the second embodiment lie in that: a valve body 90 includes a valve spool assembly 94 which is disposed in a first chamber 91. The valve spool assembly 94 further includes a valve stem 94c, a pressing piece 94f, a contact pin 94d (as shown in the dotted line) and a spring 94e. The valve stem 94c is fixedly connected with a first support frame 94a and extends along an upper end of the valve body 90; the pressing piece 94f is sleeved on the valve stem 94c, and is disposed above the spring 94e; the spring 94e is sleeved on the valve stem 94c; the contact pin 94d extends from the pressing piece 94f to a top of the valve piece 94b, one end of the contact pin 94d is fixed to the pressing piece 94f, and the other end of the contact pin 94d is in contact with the top of the valve piece 94b; and the spring 94e abuts against the first support frame 94a and the pressing piece 94f respectively.

In the present embodiment, when the inflatable product is inflated by an inflator apparatus, air flows into the first chamber 91 and applies a downward force to the valve piece 94b, the spring 94e is compressed and the valve piece 94b moves downward to make the first chamber 91 and second chambers 92 (shown in Fig. 14) communicated with each other; allowing air to enter the second chambers 92 and eventually enter the independent air chambers of the inflatable product; when the inflation is completed, the spring 94e deforms inversely under a restoring force (shown in Fig. 13), and the air in the second chambers 92 applies an upward force to the valve piece 94b, so that the valve piece 94b can be hermetically fitted to a lower end face of the first chamber 91 all the time to prevent air leakage.

In addition, the air valve assembly 300 in the third embodiment can be deflated by applying a force to the pressing piece 94f, then spring 94e is compressed and the valve piece 94b move downwardly, so that the first chamber 91 and the second chambers 92 can be communicated with each other. Then air in the independent air chambers of the inflatable product can enter the first chamber 91 through the second chambers 92 and flow outside so as to achieve deflation. When the applied force to the pressing piece 94f is removed, the spring 94e deforms inversely under a restoring force as shown in Fig. 13.

Compared with the first embodiment and the second embodiment, the air valve assembly 300 in the third embodiment is not deflated by separating the valve body 90 from a valve seat. That is, in the present embodiment, the valve seat may not be provided.

Although the utility model is disclosed as above, the utility model is not limited thereto. Any person skilled in the art will be able to make various modifications and modifications without departing from the spirit and scope of the utility model, and the scope of protection of the utility model should be determined by the scope of the claims.

## Claims

1. An air valve assembly, comprising:
a valve body, comprising: a first chamber comprising a first air inlet and a first air outlet; a plurality of second chambers, where each of the plurality of second chambers comprises a second air inlet and a second air outlet; a separating portion fixedly disposed between two adjacent second chambers and configured to separate the two adjacent second chambers; and at least one valve spool assembly disposed within the valve body and configured to control flow of air in the valve body; and
a plug, detachably connected with the valve body to prevent the flow of air;
wherein the first air outlet of the first chamber is communicated with the second air inlet of each of the plurality of second chambers.

2. The air valve assembly according to claim 1, **characterized in that**, the valve body comprises a plurality of valve spool assemblies, and the plurality of valve spool assemblies are respectively disposed in the plurality of second chambers.

3. The air valve assembly according to claim 2, **characterized in that**, the plug comprises a plurality of second plug portions, and the plurality of second plug portions are respectively detachably disposed in the plurality of second chambers to prevent the flow of air.

4. The air valve assembly according to claim 3, **characterized in that**, the plug further comprises:
a first plug portion, and the first plug portion is detachably disposed in the first chamber to prevent the flow of air; and
an end cap disposed at an upper end, and the first plug portion and the plurality of second plug portions are fixedly disposed on the end cap and extend to a lower end of the plug.

5. The air valve assembly according to claim 3, **characterized in that**, a plurality of first sealing contact surfaces are disposed at edges of a lower end portion of each of the plurality of second plug portions of the plug, a plurality of second sealing contact surfaces are disposed at edges of an upper end portion of the separating portion, and the plurality of second sealing contact surfaces are detachably connected with the plurality of first sealing contact surfaces.

6. The air valve assembly according to claim 1, **characterized by** further comprising: a valve seat having a third chamber, wherein the valve body is detachably disposed in the third chamber, and is in sealing contact with the valve seat.

7. The air valve assembly according to claim 6, **characterized in that**, an axial height of the valve body is greater than an axial height of the valve seat; and an outer side wall of a lower end of the valve body extends outwardly to form a circle of convex ribs, the valve body is configured to pass through the valve seat and clamp the valve seat between the convex ribs and the first edge.

8. The air valve assembly according to claim 3, **characterized in that**, the valve body comprises two second chambers, the plug comprises two second plug portions, and the two second plug portions are respectively detachably disposed in the two second chambers.

9. The air valve assembly according to claim 6, **characterized in that**, a second support frame is disposed at a lower end of the valve seat; and a groove is disposed on the separating portion of the valve body, an opening of the groove faces downward, and the second support frame is detachably disposed in the groove.

10. The air valve assembly according to claim 6, **characterized in that**, the air valve assembly further comprises a weld portion, and the weld portion comprises:
a first weld portion disposed at an outer side wall of an upper end of the valve seat; and
a second weld portion disposed at the second air outlet.

11. The air valve assembly according to claim 10, **characterized in that**, the outer side wall of the upper end of the valve seat extends outwardly to form a third edge, the first weld portion is fixedly connected with the third edge; and the second weld portion is fixedly connected with a lower end of the valve seat; the first weld portion is provided with a fourth edge extending outwardly, and the second weld portion is provided with a fifth edge extending outwardly; and the weld portion is fixedly connected with the valve seat through secondary injection molding.

12. The air valve assembly according to claim 1, **characterized in that**, the at least one valve spool assembly is disposed in the first chamber, and is disposed at a junction of the first chamber and the second chamber.

13. The air valve assembly according to claim 12, **characterized in that**, the at least one valve spool assembly comprises:
a first support frame fixed to an inner side wall of a lower end of the first chamber; and
a valve piece fixed between the first support frame and the separating portion, an upper surface of the valve piece is in sealing contact with a lower surface of the first support frame, and a lower surface of the valve piece is in sealing contact with an upper surface of the separating portion.

14. The air valve assembly according to claim 13, **characterized by** further comprising: a valve seat having a third chamber, wherein the valve body is detachably disposed in the third chamber and is in sealing contact with the valve seat.

15. The air valve assembly according to claim 13, **characterized in that**, the valve spool assembly further comprises a valve stem, a pressing piece, a contact pin and a spring; the valve stem is fixedly connected with the first support frame, the spring is sleeved on the valve stem, the pressing piece is sleeved on the valve stem, and the pressing piece is disposed above the spring; and the contact pin extends from the pressing piece to a top of the valve piece, one end of the contact pin is fixed to the pressing piece, and the other end of the contact pin is in contact with the top of the valve piece.
